Europäisches Patentamt

European Patent Office

Office européen des brevets

(19)

(11) EP 0 845 887 A1

(12) DEMANDE DE BREVET EUROPEEN

(43) Date de publication:
03.06.1998 Bulletin 1998/23

(51) Int Cl.$^6$: H04J 13/00

(21) Numéro de dépôt: 97402865.6

(22) Date de dépôt: 27.11.1997

(84) Etats contractants désignés:
AT BE CH DE DK ES FI FR GB GR IE IT LI LU MC
NL PT SE
Etats d'extension désignés:
AL LT LV MK RO SI

(30) Priorité: 29.11.1996 FR 9614671

(71) Demandeur: COMMISSARIAT A L'ENERGIE
ATOMIQUE
75015 Paris (FR)

(72) Inventeurs:
• Boulanger, Christophe
38320 Eybens (FR)
• Lequepeys, Jean-René
38600 Fontaine (FR)
• Herault, Laurent
38640 Claix (FR)

(74) Mandataire: Signore, Robert et al
c/o BREVATOME
25, rue de Ponthieu
75008 Paris (FR)

(54) Procédé de transmission à étalement de spectre par sequence directe, avec génération et optimisation des sequences

(57) Selon l'invention, on produit un lot de séquences aléatoires et l'on optimise ces séquences, par
exemple par un processus de type combinatoire, pour
minimiser le bruit résiduel.
Application aux transmissions.

FIG. 7

EP 0 845 887 A1

## Description

## Domaine technique

La présente invention a pour objet un procédé de transmission à étalement de spectre par séquences directes, avec génération et optimisation des séquences. Elle trouve des applications dans les transmissions et notamment :

- dans le domaine militaire : talkie-walkie du fantassin, télémesures, ...
- dans les réseaux locaux sans fil,
- dans le domaine grand public : radiotéléphones, téléphone sans fil d'intérieur, domotique (systèmes d'alarmes, ...),
- dans les réseaux locaux industriels,
- dans le domaine du transport,
- dans les liaisons multi-points à point où l'emploi de transmissions radioélectriques apporte plus de souplesse qu'une méthode traditionnelle utilisant des fibres optiques et nécessitant un calage jusque chez l'abonné final.

## Etat de la technique antérieure

La technique de modulation à étalement de spectre par séquence directe est utilisée depuis de nombreuses années. On peut en rappeler brièvement le principe.

Dans un émetteur de données numériques utilisant une technique classique, les données à émettre modulent une porteuse radio. La modulation employée peut être une modulation de phase, de fréquence ou d'amplitude ou une modulation mixte. Pour simplifier l'exposé, on se limitera aux modulations de phase, qui sont aujourd'hui, les plus utilisées.

Les données numériques à transmettre sont des éléments binaires, ou bits. Ces bits ont une période $T_b$. Avec ces bits, on peut constituer des groupes appelés symboles, dont la période, notée $T_s$, est un multiple de $T_b$. Ce sont ces symboles qui vont moduler la porteuse radioélectrique, par exemple en phase.

Deux exemples de modulation de phase peuvent illustrer cette technique :

a) la modulation dite BPSK (pour "Binary Phase Shift Keying") ; elle consiste à affecter un état de phase, par exemple 0 aux bits 0, et un état de phase $\pi$ aux bits 1 ; dans ce cas, le symbole est le bit lui-même et $T_s = T_b$; la porteuse radio voit son état de phase imposé tous les bits ;

b) la modulation dite QPSK (pour "Quaternary Phase Shift Keying") ; elle consiste à utiliser des symboles formés par deux bits successifs ; ces symboles peuvent donc prendre quatre états (00, 01, 10, 11) ; on affecte un état de la phase de la porteuse à chacun de ces états ; dans ce cas, $T_s = 2T_b$ et la porteuse radio voit son état de phase imposé tous les deux bits.

Côté réception, il faut démoduler le signal reçu. Une méthode consiste à mettre en oeuvre une technique de démodulation non cohérente, qui est fondée sur l'observation selon laquelle il suffit que la référence de phase du symbole en cours soit comparée à la phase du symbole précédent. Dans ce cas, le récepteur n'estime que la différence de phase entre deux symboles successifs. On se trouve alors en présence d'une modulation différentielle de phase DPSK ("Differential Phase Shift Keying") ou DQPSK ("Differential Quadrature Phase Shift Keying").

Dans la technique à étalement de spectre par séquence directe, on multiplie la suite des symboles (obtenue après codage différentiel dans le cas d'une modulation différentielle de phase) par une séquence pseudoaléatoire ayant un débit binaire L fois plus élevé que le débit des données à transmettre. Chaque élément binaire de la séquence pseudoaléatoire est appelé "chip". Sa durée $T_c$ est donc égale à $T_s / L$.

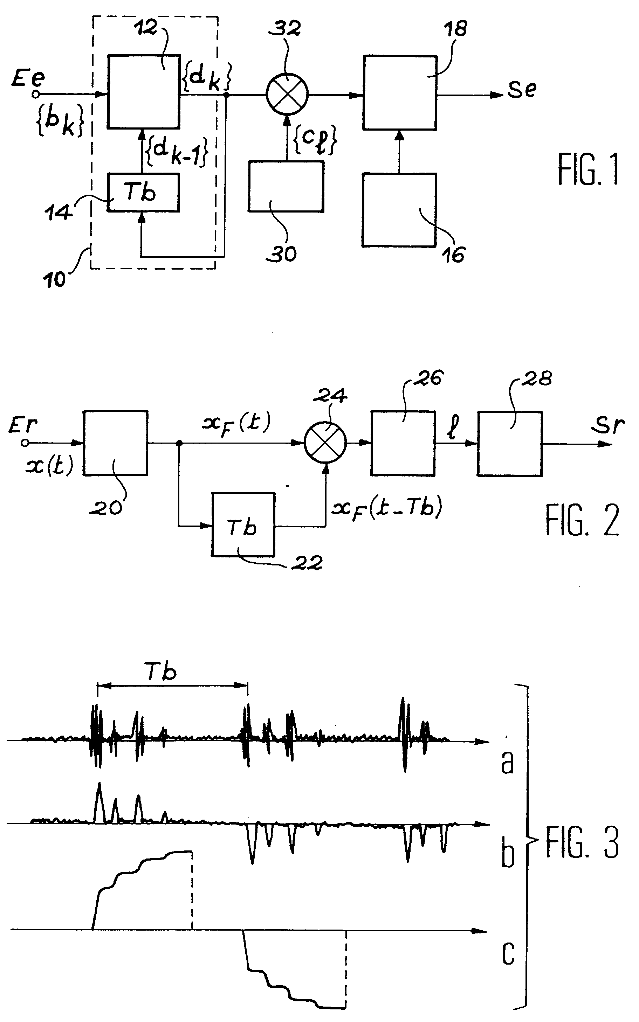

Les figures 1 à 3 annexées montrent schématiquement la structure et le fonctionnement d'un émetteur et d'un récepteur à étalement de spectre fonctionnant en DPSK. Cet état de la technique correspond au document FR-A-2 712 129.

La figure 1, tout d'abord, montre le schéma synoptique d'un émetteur. Cet émetteur possède une entrée Ee, qui reçoit les données $b_k$ à émettre et il comprend un codeur différentiel 10, composé d'un circuit logique 12 et d'un circuit à retard 14 ; l'émetteur comprend encore un générateur 30 de séquences pseudoaléatoires, un multiplexeur 32, un oscillateur local 16 et un modulateur 18 relié à une sortie Se, qui délivre le signal DPSK.

Le circuit logique 12 reçoit les données binaires $b_k$ et délivre des données binaires $d_k$. Le circuit logique 12 reçoit également les données retardées d'un rang soit $d_{k-1}$. L'opération logique effectuée dans le circuit 12 est l'opération OU-exclusif sur les données $b_k$ et sur le complément de $d_k$ retardé.

La séquence pseudoaléatoire utilisée à l'émission pour moduler les données doit posséder des fonctions d'autocorrélation paires et impaires présentant un pic marqué pour un retard nul et des lobes secondaires les plus faibles possibles. Ceci peut être obtenu en utilisant des séquences de longueur maximale (appelées aussi m-séquence) ou des séquences dites de GOLD ou de KASAMI par exemple.

La figure 2 annexée montre le schéma synoptique d'un récepteur correspondant, du type démodulateur différentiel. Ce récepteur possède une entrée Er et comprend un filtre adapté 20, dont la réponse impulsionnelle est la renversée dans le temps de la séquence pseudoaléatoire utilisée dans l'émetteur, un circuit à retard d'une durée $T_b$ référencé 22, un multiplieur 24, un intégrateur 26 sur une période $T_b$ et un circuit logique de décision 28. Le récepteur possède une sortie Sr qui restitue les données.

Si l'on note x(t) le signal appliqué à l'entrée Er, le multiplieur 24 reçoit le signal filtré $x_F(t)$ et le signal filtré-retardé $x_F(t - Y_b)$. Le produit est intégré sur une période inférieure ou égale à $T_b$ dans l'intégrateur 26, lequel délivre un signal dont la polarité permet de déterminer la valeur du bit transmis.

Le filtre d'entrée 20 utilisé dans le récepteur possède une réponse impulsionnelle équivalente en bande de base, notée H(t), et cette réponse doit être le complexe conjugé renversé dans le temps de la séquence pseudoaléatoire utilisée à l'émission.

Le filtre adapté 20 réalise donc la corrélation entre le signal appliqué à son entrée et la séquence pseudoaléatoire d'étalement.

Dans un canal à bruit additif gaussien, le signal $x_F(t)$ va donc se présenter sous la forme d'un signal impulsionnel, la fréquence de répétition des impulsions étant égale à $1 / T_b$. L'enveloppe de ce signal est la fonction d'autocorrélation du signal c(t). L'information est véhiculée par la différence de phase entre deux pics de corrélation successifs.

La sortie du multiplicateur va donc être formée d'une succession de pics positifs ou négatifs, suivant la valeur du bit transmis.

Dans le cas d'une transmission radio en présence de trajets multiples, la sortie du filtre adapté va être formée d'une succession de pics de corrélation, chaque pic correspondant à un trajet de propagation.

Les différents signaux de la chaîne de réception sont représentés sur la figure 3. La ligne (a) représente le signal filtré $x_F(t)$ ; la ligne (b) le signal de corrélation $x_F(t)^* \ x_F(t - T_b)$ ; la ligne (c) le signal à la sortie de l'intégrateur.

La technique de modulation à étalement de spectre par séquence directe est largement décrite dans la littérature spécialisée. On peut citer, par exemple, les ouvrages suivants :

- "CDMA Principles of Spread Spectrum Communication", par Andrew J. VITERBI, Addison-Wesley Wireless Communications Series ;
- "Spread Spectrum Communications", par Marvin K. SIMON et al., vol. I, 1983, Computer Science Press ;
- "Spread Spectrum Systems", par R.C. DIXON, John WILEY and Sons.

Les avantages de la technique de modulation à étalement 'de spectre par séquence directe sont multiples :

1. La discrétion : cette discrétion est liée à l'étalement de l'information transmise sur une large bande de fréquence ; il en résulte une faible densité spectrale de la puissance émise.

2. L'accès multiple : plusieurs liaisons à étalement de spectre par séquence directe peuvent partager la même bande de fréquence en utilisant des séquences pseudoaléatoires d'étalement orthogonales (séquences possédant des fonctions d'intercorrélation et d'autocorrélation les plus favorables possibles) ; plus particulièrement, on associe à chaque liaison ou utilisateur une séquence pseudoaléatoire différente, mais de même longueur ; cette technique, qui porte le nom d'accès multiples à répartition par les codes (AMRC ou CDMA en anglais), est difficile à mettre en oeuvre car les séquences utilisées jusqu'ici ne sont pas assez "orthogonales" entre elles et que cette méthode impose un contrôle de puissance adéquat. C'est ce point qui est au coeur du problème technique résolu par l'invention, comme il sera exposé plus loin.

3. Une bonne cohabitation avec les communications à bande étroite classiques : en effet, la même bande de fréquence peut être partagée par les systèmes utilisant une modulation bande étroite et par ceux qui utilisent une modulation large bande ; les communications à bande étroite ne constatent qu'une légère augmentation du bruit radioélectrique ambiant ; les communications à modulation à étalement de spectre opèrent une réjection des modulations à bande étroite grâce à l'opération de corrélation effectuée à la réception.

4. La difficulté d'interception : une transmission à étalement de spectre par séquence directe est difficile à intercepter en raison de la faible densité spectrale et du fait que le récepteur doit connaître la séquence d'étalement pour pouvoir démoduler les données.

5. Un excellent comportement dans l'environnement multi-trajets : dans ce type d'environnement, la propagation de l'onde radioélectrique s'effectue selon des trajets multiples qui mettent en jeu des phénomènes de réflexion, de diffraction et de diffusion ; en outre, il est possible qu'il n'y ait pas de trajet direct stable dans le temps entre l'émetteur et le récepteur ; cette propagation par trajets multiples induit des effets parasites qui tendent à dégrader la qualité de la transmission.

La technique par étalement de spectre, bien que très avantageuse, se heurte cependant à quelques difficultés :

1. L'élargissement de la réponse impulsionnelle : cet effet est lié au fait que les divers trajets parvenant au récepteur ont des délais de groupe différents ; cette augmentation de la réponse impulsionnelle impose une valeur limite au débit d'informations à transmettre ; la durée du symbole transmis doit être beaucoup plus élevée que cette largeur de réponse impulsionnelle, si l'on veut obtenir un taux d'erreur acceptable.

2. Les évanouissements (ou "fading") : ces évanouissements ont pour origine la réduction de la somme vectorielle effectuée au niveau de l'antenne de réception ; cette réduction correspond à des interférences destructives entre les divers signaux reçus ; des fluctuations importantes du niveau apparaissent également dans le cas d'une liaison de point fixe à point fixe. Elles sont, dans ce cas, engendrées par les mouvements de personnel ou de véhicules dans l'environnement radioélectrique. Les techniques employées de manière classique pour pallier cette défaillance sont des techniques dites de diversité ; elles consistent à utiliser plusieurs signaux statistiquement indépendants pour retrouver l'information utile (par exemple, plusieurs antennes de réception).

3. Le bruit Doppler : l'effet Doppler provoque, à la réception, un décalage en fréquence du signal ; ce décalage est proportionnel à la vitesse de déplacement et au cosinus de l'angle formé par le vecteur vitesse et le champ électrique associé à l'onde radioélectrique ; dans un environnement à trajets multiples, puisque les directions d'arrivée des différents trajets sont quelconques, le décalage se traduit par un bruit en fréquence.

L'une des caractéristiques essentielles de la technique à étalement de spectre est l'utilisation de séquences de bits. Ces séquences sont formées de bits qui sont les racines Même de l'unité, soit

$$\exp\left(j\,\frac{2k\pi}{M}\right)$$

pour k=0,1,2, ... (M-1) où j est le symbole des nombres imaginaires ($j^2$=-1).

Dans le cas de la modulation BPSK, le nombre M vaut 2 et les deux valeurs des bits sont obtenues pour k=0 et k=1 soit 1 et -1. La phase de la porteuse vaut alors 0 ou $\pi$. Pour la modulation QPSK, M vaut 4 et les quatre valeurs possibles pour les bits sont 1,j,-1 et -j. La phase de la porteuse vaut alors 0, $\pi/2$, $3\pi/2$ ou $\pi$. On désignera, par la suite, par la notation "cas" la valeur de ces bits. Autrement dit "cas" sera égal à +1 ou -1 dans la modulation BPSK et à 1, j, -1, -j dans la modulation QPSK.

Pour une description plus complète de ces séquences, on se référera utilement à :

- "Crosscorrelation Properties of Pseudorandom and Related Sequences" de D.V. SARWATE et M.B. PURSLEY, publié dans Proc. IEEE, vol. 68, pp. 593-619, mai 1980 ;
- "Korrelationsignale" de H.D. LUKE (Springer-Verlag Berlin Heidelberg, New York, 1992).

Cependant, la théorie mathématique qui est à la base de la construction de ces séquences ne permet d'optimiser généralement que les corrélations paires ou périodiques des familles de séquences. Dans le cas de la synchronisation, les séquences de bits de la famille doivent avoir des fonctions d'autocorrélation paire favorables, c'est-à-dire que les fonctions de u suivantes :

$$\underset{u}{\text{Max}}\left|\sum_{i=0}^{L-1-u} X_i X_{i+u}^* + \sum_{i=L-u}^{L-1} X_i X_{i+u}^*\right|$$

doivent être les plus faibles possibles pour les u entiers différents de 0 modulo la longueur L des séquences, et ce pour toutes les séquences orthogonales, pour permettre un accès multiple. La littérature ne permet de trouver des séquences possédant de bonnes qualités que pour les fonctions d'intercorrélation paires, c'est-à-dire que les fonctions de u suivantes :

$$\underset{u}{\text{Max}}\left|\sum_{i=0}^{L-1-u} X_i Y_{i+u}^* + \sum_{i=L-u}^{L-1} X_i Y_{i+u}^*\right|$$

doivent être les plus faibles possibles, quel que soit u entier, et ce quelles que soient les différentes séquences $(X_r)$ et $(Y_r)$ de même longueur L de la famille de séquences pseudoaléatoires considérée. Dans ces expressions, $X_i$ et $Y_i$ sont les valeurs des bits de la séquence considérée. On rappelle que ces bits composant les séquences valent 1 ou -1 dans le cas des séquences binaires et 1, j, -1 ou -j dans le cas des séquences quaternaires.

Malheureusement, la seule minimisation de ces fonctions sur toutes les séquences possibles différentes et de même longueur L ne suffit pas. En effet, dans le cas de bits consécutifs différents, les fonctions à minimiser sont les suivantes :

$$\underset{u}{\text{Max}} \left| \sum_{i=0}^{L-1-u} X_i Y_{i+u}^* + \text{cas} \sum_{i=L-u}^{L-1} X_i Y_{i+u}^* \right|,$$

pour les différentes séquences $(X_r, Y_r)$ de la famille, et pour tout u entier, et

$$\underset{u}{\text{Max}} \left| \sum_{i=0}^{L-1-u} X_i X_{i+u}^* + \text{cas} \sum_{i=L-u}^{L-1} X_i X_{i+u}^* \right|,$$

pour toutes les séquences $(X_r)$ de la famille et pour tout u entier différent de 0 modulo la longueur L des séquences. Dans ces expressions, la notation "cas" représente 1 ou -1 pour le cas d'une modulation différentielle de phase où les données transmises représentées par leurs diverses différences de phase ne prennent que deux états, 0 ou $\pi$ (DBPSK) et 1, j, -1, ou -j lorsque les phases sont 0, $\pi/2$, $3\pi/2$ ou $\pi$ (DQPSK).

Le maximum de ces fonctions sur toutes les séquences composant la famille sera appelé par la suite "bruit résiduel". C'est cette valeur que l'on doit minimiser dans le cas de l'accès multiple à répartition par les codes (AMRC ou CDMA). Elle permet une meilleure synchronisation des données transmises par les différents utilisateurs au niveau des filtres adaptés.

Pour résumer, les techniques de l'art antérieur présentent un premier inconvénient lié à ce que les séquences utilisées sont construites de manière à seulement optimiser les fonctions d'autocorrélation et d'intercorrélation paires.

On peut souligner un second inconvénient. Les séquences construites selon l'art antérieur n'existent pas pour n'importe quelle longueur de séquence. On ne sait construire que des séquences ayant pour longueur des entiers du type $2^n-1$ (n entier). Le nombre de séquences différentes obtenues est relativement faible (par exemple,

$$2^{\frac{n}{2}}$$

pour la famille de KASAMI et n+2 pour la famille de GOLD).

Les inconvénients majeurs liés à de telles familles de séquences sont les suivants :

- Si l'on désire moins de séquences d'une longueur donnée, on va extraire du lot de séquences optimales les meilleures séquences, mais rien ne garantit qu'elles seront optimales, c'est-à-dire que rien ne garantit que l'on aura obtenu le meilleur lot de séquences en termes de performances. En réalité, l'expérience montre que les performances obtenues avec de tels ensembles sont loin d'être satisfaisantes.
- De plus, si l'on désire un nombre de séquences plus important que celles du lot, ces techniques ne fournissent pas de solution.
- Enfin, si l'on souhaite des jeux de séquences pour différentes longueurs, la littérature ne fournit aucune aide.

La présente invention a justement pour but de remédier à tous ces inconvénients.

## Exposé de l'invention

A cette fin, l'invention préconise d'engendrer un lot de séquences dont le nombre et la longueur tiennent compte des contraintes imposées par le système de transmission (nombre d'utilisateurs, conditions de propagation, débit d'informations, etc...), ces séquences étant par ailleurs optimisées, en ce sens qu'elles rendent minimales certaines quantités comme celles qui ont été définies précédemment définissant ce qui a été appelé "bruit résiduel", l'optimisation tenant compte de toutes les fonctions d'autocorrélation et/ou d'intercorrélation (et pas seulement des fonctions paires). Cette optimisation peut être obtenue par un processus consistant à partir de séquences aléatoires et à développer un processus du type de ceux qu'on rencontre en analyse combinatoire, pour parvenir à un lot de séquences minimisant le bruit résiduel. On affecte alors ces séquences aux divers utilisateurs du système de transmission. Si les contraintes viennent à changer, par exemple par réduction du nombre d'utilisateurs, on peut redéfinir un nouveau lot de séquences, toujours optimisées par analyse combinatoire et réaffecter ce nouveau lot aux utilisateurs restants. Le procédé de l'invention permet donc d'avoir l'assurance que le lot de séquences sera toujours optimal, quelles que soient les contraintes imposées au système.

De façon plus précise, la présente invention a pour objet un procédé de transmission à étalement de spectre par séquences directes, dans lequel :

A) à l'émission

- on produit au moins une séquence pseudoaléatoire d'éléments appartenant à l'ensemble des racines $M^{ième}$ de l'unité ayant un débit plus important que celui des données à transmettre,
- on affecte à chaque utilisateur du procédé une de ces séquences,
- on multiplie les données à transmettre à un utilisateur déterminé par la séquence correspondant à cet utilisateur,
- on module une porteuse radioélectrique par tous les signaux obtenus après multiplication des diverses données à transmettre par les séquences correspondantes,
- on émet le signal formé par la porteuse ainsi modulée,

B) à la réception, chez chaque utilisateur :

- on reçoit le signal transmis,
- on soumet le signal reçu à un filtrage adapté à la séquence pseudoaléatoire affectée à cet utilisateur, le signal reçu comportant des pics de grande amplitude, appelés pics principaux et des pics de moindre amplitude appelés pics secondaires,
- on effectue une décision de bit ("bit detection", en anglais) à partir des pics principaux du signal filtré,
- et l'on restitue l'information transmise,

ce procédé étant caractérisé par le fait que :

- on produit un lot de N séquences aléatoires d'éléments appartenant à l'ensemble des racines $M^{ième}$ de l'unité, N étant un entier au moins égal à 1, ces séquences ayant toute une certaine longueur L,
- on optimise ces séquences à l'égard de l'une au moins des fonctions d'autocorrélation et d'intercorrélation,
- on affecte l'une de ces séquences ainsi optimisées à chaque utilisateur,
- si les conditions d'utilisation du procédé changent, on produit à nouveau un lot de séquences optimisées et l'on réaffecte les nouvelles séquences optimisées obtenues aux différents utilisateurs.

De préférence, on minimise au moins l'une des quantités suivantes :

a)

$$\underset{u}{Max}\left|\sum_{i=0}^{L-1-u} X_i Y^*_{i+u} + cas \sum_{i=L-u}^{L-1} X_i Y^*_{i+u}\right|,$$

u étant un entier non congru à 0 modulo L et pour tous les doublets de séquences (X, Y) du lot, X et Y étant deux séquences différentes,
b)

$$\underset{u\neq 0}{Max}\left|\sum_{i=0}^{L-1-u} X_i X^*_{i+u} + cas \sum_{i=L-u}^{L-1} X_i X^*_{i+u}\right|,$$

u étant un entier non congru à 0 modulo L, pour toutes les séquences X du lot, le facteur "cas" étant égal aux différentes valeurs possibles des éléments appartenant à l'ensemble des racines $M^{ième}$ de l'unité.

Selon un mode de mise en oeuvre avantageux, on minimise au moins l'une des quantités suivantes :

a)

$$Max_u \left| f(u) \left[ \sum_{i=0}^{L-1-u} X_i Y_{i+u}^* + cas \sum_{i=L-u}^{L-1} X_i Y_{i+u}^* \right] \right|,$$

u étant un entier non congru à 0 modulo L et pour tous les doublets de séquences (X, Y) du lot, X et Y étant deux séquences différentes,

b)

$$Max_u \left| f(u) \left[ \sum_{i=0}^{L-1-u} X_i X_{i+u}^* + cas \sum_{i=L-u}^{L-1} X_i X_{i+u}^* \right] \right|,$$

u étant un entier non congru à 0 modulo L, pour toutes les séquences X du lot, le facteur "cas" étant égal aux différentes valeurs possibles des éléments appartenant à l'ensemble des racines $M^{ième}$ de l'unité,

où f(u) est une fonction de pondération.

Selon un autre mode de mise en oeuvre, on minimise la fonction quadratique suivante :

$$\sum_{u=0}^{L-1} f(u) \left( \sum_{k=0}^{M-1} \left[ \sum_{i=0}^{L-1-u} X_i Y_{i+u}^* + e^{\frac{2jk\pi}{M}} \cdot \sum_{i=L-u}^{L-1} X_i Y_{i+u}^* \right]^2 \right),$$

pour tous les doublets de séquences (X,Y) du lot, X et Y étant deux séquences différentes et pour toute fonction de pondération f(u), où u est un entier.

Toute technique d'optimisation combinatoire connue peut être utilisée dans l'invention. De manière avantageuse, on utilisera l'une ou l'autre des techniques suivantes :

a) les techniques dérivées de la physique statistique appelées "recuit simulé" ("simulated annealing" en anglais), ou recuit microcanonique et leurs variantes. Pour une description de ces méthodes, on pourra se référer aux publications suivantes :

- "Optimization by Simulated Annealing", de S. KIRKPATRICK, C. GELATT et M. VECCHI, dans "Science", vol. 220, 1983 ;
- "General Local Searchs Heuristics in Combinatorial Optimization : a Tutorial", de M. PIRLOT dans "Belgian Journal of Operations Research, Statistics and Computer Science", vol. 32, n.1-2, 1992 ;
- "Figure-Ground Discrimination : a Combinatorial Optimization Approach", de L. HERAULT et R. HORAUD, dans "IEEE Transactions on Pattern Analysis and Machine Intelligence", vol. 15, n°9, septembre 1993.

b) Les modélisations dérivées de processus génétiques : les algorithmes génétiques et leurs variantes. Pour une description de ces méthodes, on pourra se référer aux publications suivantes :

- "Genetics Algorithms in Search Optimization and Machine Learning", de D. GOLDBERG, ADDISON-WESLEY, Reading, Mass., 1989 ;
- "General Local Searchs Heuristics in Combinatorial Optimization : a Tutorial" de M. PIRLOT dans "Belgian Journal of Operations Research, Statistics and Computer Science", vol. 32, n.1-2, 1992.

c) Les processus à mémoire : la recherche dite "TABOU" ("TABU" en anglais) et ses variantes. Pour une description de ces méthodes, on pourra se référer aux publications suivantes :

- "TABU Search" de F. GLOVER et M. LAGUNA, dans "Modern Heuristic Techniques for Combinatorial Problems", 1992 ;
- "General Local Search Heuristics in Combinatorial Optimization : a Tutorial", de M. PIRLOT, dans "Belgian Journal of Operations Research, Statistics and Computer Science", vol. 32, n°1-2, 1992.

Dans le cas particulier d'une modulation de phase binaire (M=2), et où les données à transmettre sont binaires, selon un mode avantageux, à la suite de l'étape de multiplication des données à l'émission par la séquence correspondant à l'utilisateur déterminé et avant l'étape de modulation d'une porteuse radioélectrique, on applique un procédé de codage, par exemple un procédé utilisant un code correcteur d'erreurs, un entrelacement, etc., pour s'affranchir des erreurs liés aux canaux de transmission.

A la réception, après l'étape de filtrage adapté, on applique un procédé de décodage consistant à effectuer la multiplication du signal filtré et du signal filtré retardé.

Par exemple, le procédé de codage peut être celui décrit dans le document FR-A-2 707 441. Ensuite, on restitue l'information binaire par un procédé de diversité. Par exemple, le procédé de diversité consiste à intégrer les énergies véhiculées par chacun des chemins de propagation des canaux de transmission.

**Brève description des dessins**

- la figure 1, déjà décrite, est un schéma synoptique d'un émetteur connu à étalement de spectre ;
- la figure 2, déjà décrite, est un schéma synoptique d'un récepteur connu à étalement de spectre ;
- la figure 3, déjà décrite, illustre le fonctionnement général d'un récepteur ;
- la figure 4 illustre les variations du bruit résiduel obtenu pour une séquence unique en fonction de sa longueur ;
- la figure 5 montre les variations du bruit résiduel en fonction de la taille de la famille de séquences, pour des séquences binaires ;
- la figure 6 montre les variations du bruit résiduel en fonction de la famille des séquences, pour des séquences quaternaires ;
- la figure 7 montre le schéma synoptique d'un émetteur mettant en oeuvre l'invention.

**Description de modes particuliers de réalisation**

Quelques exemples de mise en oeuvre du procédé de l'invention vont être décrits pour diverses méthodes d'optimisation combinatoire. Dans ces exemples, on appellera "fonction coût" les quantités définies plus haut traduisant la présence du bruit résiduel. Dans tous les exemples qui seront illustrés, les formules et valeurs numériques données doivent être considérées comme des exemples, que les inventeurs considèrent comme de bons modes de réalisation, notamment pour ce qui est de la rapidité. Mais il va de soi que l'invention n'est pas limitée à ces exemples.

**A) Mise en oeuvre par la méthode "Tabou"**

Ce processus d'optimisation comprend 9 étapes :

1. On part d'une famille de N séquences générée aléatoirement (la qualité des solutions trouvées par les algorithmes d'optimisation combinatoire dépend très peu de l'état initial). On lui associe une famille, de même taille, de listes "tabou", qui ont pour éléments les valeurs "tabou" associées à chacune des positions des bits des séquences de la famille. Au tout début, les valeurs "tabou" sont toutes initialisées à 0. A partir de cette configuration initiale, on calcule une première fonction coût telle que décrite plus haut.
2. On définit ensuite un nombre S de bits que l'on va observer dans cette famille de séquences. S est défini par exemple par la formule :

$$N = E\left(\frac{L}{30}\right) + 1,$$

où E(x) désigne la partie entière du réel x entre parenthèses et une valeur initiale T du paramètre tabou :

$$T = E'\left(\frac{7L}{80}\right),$$

où E'(.) est tel que X étant un nombre réel, avec L>11 et T=1 sinon :

$$\begin{cases} \text{si } X - E(X) < 0{,}5, \text{ alors } E'(X) = E(X) \\\\ \text{si } X - E(X) \geq 0{,}5, \text{ alors } E'(X) = E(X) + 0{,}5 \end{cases}$$

3. Ensuite, on détermine quels seront les bits à scruter de manière aléatoire. On peut appeler cet ensemble le "voisinage" courant.

4. Pour chacune de ces positions ou éléments du voisinage, on évalue ce qu'apporterait, en terme de performances, un changement de valeur des bits associés, c'est-à-dire que l'on évalue la fonction coût associée à la transformation élémentaire de chacun de ces éléments séparément :

- Si le changement de ces bits correspond à une minimisation de la fonction coût, alors on les modifie à la condition que l'on ne modifie pas trop souvent ces derniers. C'est la liste "tabou" associée aux positions des bits de la séquence qui permet de le dire. A chaque choix de tels bits, la valeur du paramètre tabou est réinitialisée si elle n'est pas nulle au moment de ce choix.
- Sinon, on modifie quand même un bit du voisinage courant qui correspond à un autre meilleur changement (à la condition que son paramètre tabou soit nul et ce, même si l'on dégrade la performance de la solution courante). L'idée est de se déplacer dans l'espace multi-dimensionnel des minima locaux et de "stocker" la meilleure solution trouvée. Dans le cas où les modifications de plusieurs bits un "voisinage" courant donnent la même performance, on tire au sort le bit dont on va modifier la valeur.

5. Après modification du bit, on obtient une nouvelle configuration courante.

6. Les éléments constituant la liste "tabou" sont décrémentés d'une unité, sauf s'ils sont nuls. On retourne à l'étape 3 tant que l'on n'a pas effectué I itérations ou changements de bits, sinon on va à l'étape 7. Pour les exemples numériques qui seront décrits plus bas, I a été choisi égal à 10000.

7. On augmente la valeur de S (procédé de diversification), S devenant par exemple S+z, avec z=entier positif, par exemple z=5, et on retourne à l'étape 3 tant que la valeur de S est inférieure à la longueur L des séquences, sinon on va à l'étape 8.

8. On diminue la valeur du paramètre tabou T, T devenant T-1 et on recommence l'étape 3 tant que T n'est pas nul, sinon on passe à l'étape 9.

9. Arrêt et sauvegarde de la meilleure famille de séquences obtenues au cours de la recherche.

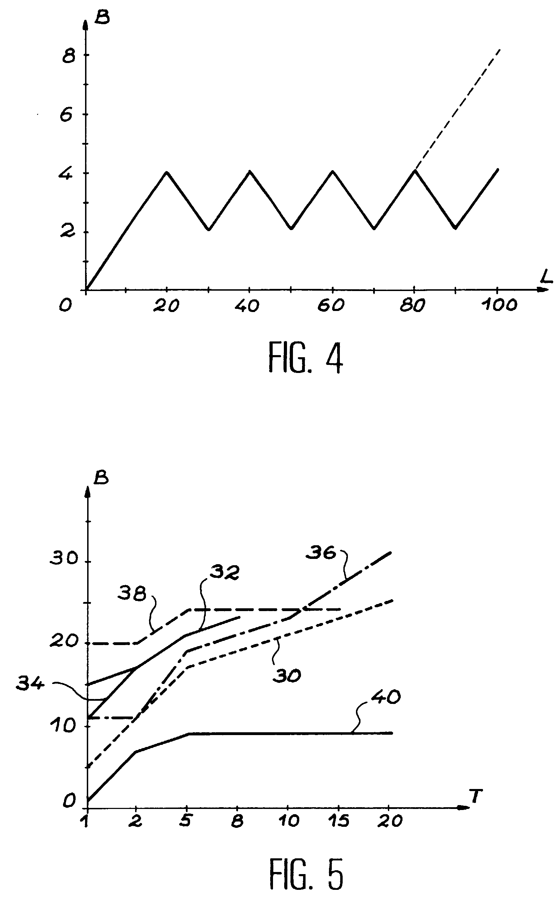

Les performances obtenues sont illustrées sur la figure 4 dans le cas d'une seule séquence. La longueur L de la séquence est portée en abscisses et le bruit résiduel B est porté en ordonnées. La courbe en trait plein correspond à l'optimum théorique et la courbe en trait interrompu à l'invention. On voit que, jusqu'à une longueur de séquence égale à 80, les résultats sont optimaux. Au-delà de 80, les résultats sont un peu inférieurs en qualité à l'optimum théorique (le bruit résiduel est plus grand) mais les performances restent bonnes (jusqu'à des longueurs d'environ 150).

Pour des familles de séquences, les performances sont illustrées sur la figure 5 pour le cas où les séquences ont une longueur L de 63 et sont des séquences binaires. En abcisse est portée la taille N de la famille et en ordonnée le bruit résiduel B.

La courbe 30 correspond à l'invention. Les courbes 32, 34, 36, 38 et 40 correspondent à l'art antérieur respectivement selon les techniques NO, KASAMI, Dual BCH, IM3 et WELCH. Pour cette dernière, il ne s'agit que de corrélations paires.

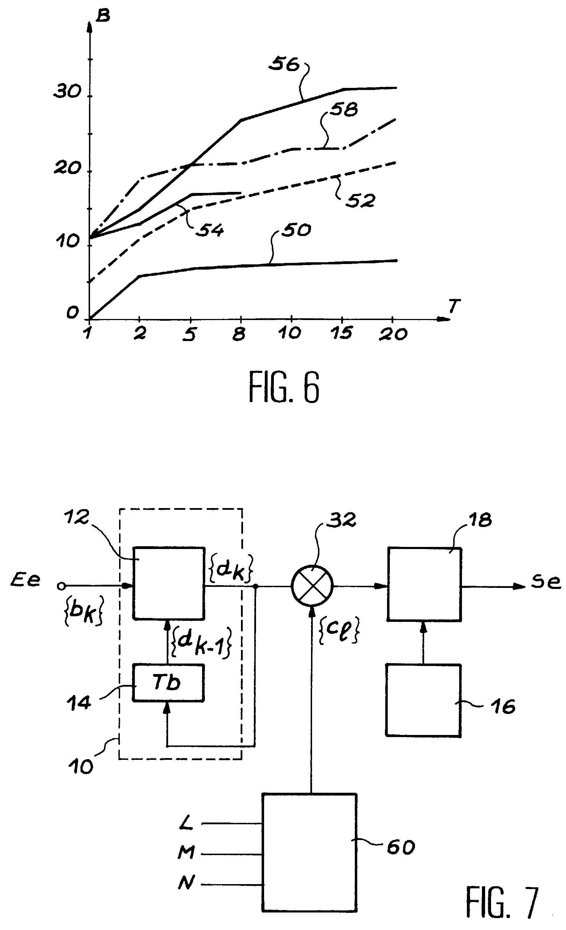

La figure 6 montre les performances obtenues avec des séquences quadriphases, toujours de longueur 63. L'invention correspond à la courbe 52; Les courbes 54, 56, 58 et 60 correspondent respectivement aux méthodes NOVOSAD, EOE, COSET et WELCH, cette dernière étant limitée à la corrélation paire.

**B) Mise en oeuvre par la méthode du "recuit simulé"**

1. On part, par exemple, encore d'une famille de séquences générée aléatoirement. On lui associe par exemple un nombre Nb=100 L et une valeur Te, appelée température, T=4L. On peut également remplacer T=4L par un procédé de détermination automatique : par exemple, on initialise T de façon à ce que 80% des transformations effectuées soient acceptées. A partir de cette configuration initiale, on calcule une première fonction coût telle que définie plus haut.

2. Ensuite, on détermine quel sera le bit que l'on va observer de manière aléatoire.

3. On calcule la fonction coût associée à la transformation élémentaire de ce bit, cette fonction coût diffère d'une quantité $\Delta E$ de la fonction coût évaluée précédemment. On applique alors un critère dit de Mètropolis :

- Si le changement de bit correspond à une minimisation de la fonction coût, c'est-à-dire que $\Delta E<0$, alors on le modifie.
- Sinon, on décide de modifier ce bit avec une probabilité de type BOLTZMANN : $p = \exp\text{-}\left(\frac{\Delta E}{kTE}\right)$.
  L'idée est d'avoir plus de chance d'accepter une modification "défavorable" lorsque Te est importante que lorsque Te est petite.

4. Après modification ou non du bit, on obtient une nouvelle configuration courante ; on retourne alors à l'étape 2 par exemple tant que l'on n'a pas accepté 10L transformations ou tant que l'on n'a pas effectué Nb transformations acceptées ou non ; dans ce cas, on passe à l'étape 5, sauf si le pourcentage de transformations acceptées par rapport au nombre de séquences testées est inférieure à un certain seuil par exemple (0,01%) ; dans ce dernier cas, on passe à l'étape 6.

5. On diminue la température par exemple de Te à 0,95Te et on passe à l'étape 2.

6. On pose Te=0 et on effectue des changements aléatoires pour voir si l'on ne peut pas trouver une famille de séquences de meilleure qualité (technique de descente classique) ; si c'est le cas, on dit que le système est effectivement gelé et l'on passe à l'étape 7 ; sinon on augmente la température que l'on avait juste avant de Te à par exemple 1,3Te et l'on retourne à l'étape 2.

7. Arrêt et sauvegarde de la meilleure famille de séquences obtenues au cours de la recherche.

**C) Mise en oeuvre par la méthode du "recuit microcanonique"**

1. On part toujours d'une famille de séquences générées aléatoirement. On lui associe les nombres Nc et EC avec par exemple Nc=100L et EC=L. A partir de cette configuration initiale, on calcule une première fonction coût.

2. Ensuite, on détermine quel sera le bit que l'on va observer de manière aléatoire.

3. On calcule la fonction coût associée à la transformation élémentaire de ce bit, cette fonction coût diffère d'une quantité $\Delta E$ de la fonction coût évaluée précédemment. On applique alors un critère dit de CREUTZ :

- Si le changement de ce bit correspond à une minimisation de la fonction coût, c'est-à-dire que $\Delta E>0$, alors on le modifie. On modifie de plus la valeur de EC en EC-$\Delta E$.
- Sinon, on décide de modifier quand même ce bit si EC>$\Delta E$ et on modifie alors la valeur de EC comme dans le paragraphe précédent. Dans le cas contraire, la transformation est refusée et l'on ne fait pas de modification sur EC.

4. Après modification ou non du bit, on obtient une nouvelle configuration courante ; on retourne alors à l'étape 2 tant que l'on n'a pas accepté par exemple 10L transformations ou tant que l'on n'a pas effectué 100 Nc transformations acceptées ou non ; dans ce cas, on passe à l'étape 5, sauf si le pourcentage de transformations acceptées par rapport au nombre de séquences testées est inférieur à un certain seuil par exemple (0,01%) ; dans ce dernier cas, on passe à l'étape 6.

5. On diminue la valeur de EC à 0,96EC et on passe par exemple à l'étape 2.

6. On effectue des changements aléatoires pour voir si on ne peut pas trouver une famille de séquences de meilleure qualité (technique de descente classique). Si c'est le cas, on dit que le système est effectivement gelé et on passe à l'étape 7. Sinon, on augmente la valeur de EC à 1,2EC et on retourne par exemple à l'étape 2.

7. Arrêt et sauvegarde de la meilleure famille de séquences obtenues au cours de la recherche.

**D) Mise en oeuvre par la méthode de l'optimisation canonique**

1. On part d'une famille de séquences par exemple générées aléatoirement. A partir de cette configuration initiale, on effectue une suite de transformations favorables aléatoires de manière à obtenir une nouvelle configuration dont la fonction coût vérifie un minimum local : l'énergie de cette fonction coût est notée EF ; on associe à cette nouvelle configuration initiale, les nombres No=100L et EC=EF ; à partir de cette configuration initiale, on calcule une première fonction coût.

2. Ensuite, on détermine quel sera le bit que l'on va observer de manière aléatoire.

3. On calcule la fonction coût associée à la transformation élémentaire de ce bit, cette fonction coût diffère de $\Delta E$ de la fonction coût évaluée précédemment. On applique alors un critère dit de CREUTZ "modifié" :

- Si le changement de ce bit correspond à une minimisation de la fonction coût, c'est-à-dire que $\Delta E<0$, et si EC≤EF, alors on le modifie ; on modifie de plus la valeur de EC en EC-$\Delta E$ ;
- Si le changement de ce bit correspond à une minimisation de la fonction coût, c'est-à-dire $\Delta E<0$, et si EC>EF, alors on le modifie ; on ne modifie pas la valeur de EC ;
- Sinon, on décide de modifier quand même ce bit si EC>$\Delta E$ et on modifie alors la valeur de EC comme dans le premier paragraphe ; dans le cas contraire, la transformation est refusée et l'on ne fait pas de modification sur EC.

4. Après modification ou non du bit, on obtient une nouvelle configuration courante. On retourne alors à l'étape 2 tant que l'on n'a pas accepté par exemple 10L transformations ou tant que l'on n'a pas effectué par exemple 100 No transformations acceptées ou non ; dans ce cas, on passe à l'étape 5, sauf si le pourcentage de transformations acceptées par rapport au nombre de séquences testées est inférieure à un certain seuil par exemple 0,01% ; dans ce dernier cas, on passe à l'étape 6.

5. On diminue la valeur de EC à 0,96XEC et on passe par exemple à l'étape 2.

6. On effectue des changements aléatoires pour voir si on ne peut pas trouver une famille de séquences de meilleure qualité (technique de descente classique). Si c'est le cas on dit que le système est effectivement gelé et on passe à l'étape 7. Sinon, on augmente la valeur de EC à par exemple 1,2EC et on retourne à l'étape 2.

7. Arrêt et sauvegarde de la meilleure famille de séquences obtenues au cours de la recherche.

### E) Mise en oeuvre par la méthode de l'algorithme génétique

1. On part d'une famille de séquences générées aléatoirement. A partir de cette configuration initiale, on calcule une première fonction coût.

2. On définit ensuite un nombre Ng de bits que l'on va observer dans cette famille de séquences par la formule :

$$Ng \;=\; E\!\left(\frac{L}{30}\right) \;+\; 1,$$

où E(x) désigne la partie entière du réel x entre parenthèses.

3. Ensuite, on détermine quels seront les bits à scruter de manière aléatoire. On appelle cet ensemble le "voisinage courant".

4. Pour chacune de ces positions ou éléments du voisinage, on évalue ce qu'apporterait en terme de performances, un changement de valeur des bits associés, c'est-à-dire que l'on évalue la fonction coût associée à la transformation élémentaire de chacun de ces éléments séparément :

- Si le changement de ces bits correspond à une minimisation de la fonction coût, alors on les modifie ; les séquences "modifiées" sont alors appareillées deux par deux de manière aléatoire ; on effectue ensuite un croisement ("crossover") sur ces paires, c'est-à-dire qu'à chaque paire on associe un entier x≤L aléatoire et au niveau de la paire de séquences considérées on tronque ces dernières à partir du x-ième rang et on échange les morceaux de séquences (on limite, de ce fait, les appariements des allèles pour les processus biologiques) ;
- Sinon, on ne modifie pas les séquences considérées.

5. On élimine les mauvais appariements, c'est-à-dire ceux qui amènent une dégradation de la solution précédente ; on garde les autres, c'est-à-dire ceux qui présentent des performances au moins égales en terme de fonction coût à celle de la configuration précédente.

6. Après élimination des mauvais appariements, on obtient une nouvelle configuration courante. On retourne alors à l'étape 3 jusqu'à ce que l'on ait fait par exemple 100L transformations acceptées ou non ; à la 100L-ième transformation, on va à l'étape 7.

7. On augmente la valeur de Ng (procédé de diversification par exemple) ; Ng devient Ng+5 et on retourne à l'étape 3 tant que la valeur de N est inférieure à la longueur L des séquences, sinon on va à l'étape 8.

8. Arrêt et sauvegarde de la meilleure famille de séquences obtenues au cours de la recherche.

La figure 7 illustre schématiquement la structure d'un émetteur mettant en oeuvre le procédé de l'invention. Sur cette figure, les moyens déjà représentés sur la figure 1 portent les mêmes références. Le circuit 60, propre à l'invention, reçoit les informations relatives aux contraintes momentanées du système et, par exemple, le nombre N de séquences dont il faut disposer, leur longueur L, le nombre M représentant le type de modulation (M=2 pour la modulation à deux états de phase appelée modulation linéaire et 4 pour la modulation à 4 états) etc...

Ce circuit 60 produit et optimise un lot de séquences comme il a été dit et affecte ces séquences aux divers utilisateurs. Si les conditions de la transmission changent, le circuit 60 redéfinit un nouveau lot de séquences optimisées.

Dans la description qui précède, on traite à la fois la fonction d'intercorrélation (qui minimise le bruit d'accès multiple lorsqu'il existe plusieurs utilisateurs (N>1)) et la fonction d'autocorrélation (qui rend plus facile la synchronisation (à quel moment on est en phase avec le pic de corrélation) et qui augmente la robustesse en présence de trajets multiples). Mais l'invention ne se limite à ce cas. On peut aussi ne traiter qu'une seule de ces fonctions. Par exemple, dans le cas d'un seul utilisateur (N=1), on produira une seule séquence pseudo-aléatoire, de sorte que la notion d'intercorrélation n'interviendra pas. On ne travaillera donc que sur la fonction d'autocorrélation. Dans le cas où il y a plusieurs utilisateurs (N>1), on produira plusieurs séquences aléatoires et l'on pourra choisir d'optimiser un type de critère ou un autre, ou les deux.

En pratique, lorsqu'on effectue un procédé d'optimisation combinatoire en minimisant à la fois le premier critère (1$^{ère}$ fonction) et le second critère (2$^{ème}$ fonction), cela revient à affecter le même poids à la prise en compte du bruit d'accès multiple et à la robustesse vis-à-vis de la synchronisation et/ou la présence de trajets multiples.

Par exemple, si on veut favoriser la minimisation de l'effet perturbant du bruit d'accès multiple, on ne tient pas compte de la seconde équation.

Selon un autre exemple, dans une configuration à peu d'utilisateurs, on pourra ne tenir compte que de la 1$^{ère}$ fonction, parce que le bruit d'accès multiple est dans ce cas limité.

On peut donc pondérer les fonctions d'intercorrélation et d'autocorrélation par une fonction de pondération f(u). On optimise ainsi l'une ou l'autre des deux fonctions suivantes (ou les deux) :

a)

$$\underset{u}{Max}\left| f(u)\left[ \sum_{i=0}^{L-1-u} X_i Y_{i+u}^* + cas \sum_{i=L-u}^{L-1} X_i Y_{i+u}^* \right] \right| ,$$

u étant un entier non congru à 0 modulo L et pour tous les doublets de séquences (X, Y) du lot, X et Y étant deux séquences différentes,

b)

$$\underset{u}{Max}\left| f(u)\left[ \sum_{i=0}^{L-1-u} X_i X_{i+u}^* + cas \sum_{i=L-u}^{L-1} X_i X_{i+u}^* \right] \right| ,$$

u étant un entier non congru à 0 modulo L, pour toutes les séquences X du lot, le facteur "cas" étant égal aux différentes valeurs possibles des éléments appartenant à l'ensemble des racines M$^{ième}$ de l'unité,

où f(u) est une fonction de pondération.

On peut minimiser également la fonction quadratique suivante :

$$\sum_{u=0}^{L-1} f(u)\left( \sum_{k=0}^{M-1}\left[ \sum_{i=0}^{L-1-u} X_i Y_{i+u}^* + e^{\frac{2jk\pi}{M}} \cdot \sum_{i=L-u}^{L-1} X_i Y_{i+u}^* \right]^2 \right) ,$$

pour tous les doublets de séquences (X,Y) du lot, X et Y étant deux séquences différentes.

On peut aussi minimiser la fonction :

$$\sum_{u=0}^{L-1} f(u) \left( \sum_{k=0}^{M-1} \left[ \sum_{i=0}^{L-1-u} X_i Y_{i+u}^* + e^{\frac{2jk\pi}{M}} \cdot \sum_{i=L-u}^{L-1} X_i X_{i+u}^* \right]^2 \right),$$

où f(u) est une fonction de pondération.

Quelques exemples de la pondération f(u) peuvent être donnés :

a) f(0)=1 et f(u)=0, si u est différent de 0 : c'est le cas de communications synchrones ;
b) f(u)=1 si u est compris dans l'intervalle [-δ,+δ], où δ est un entier et f(u)=0, si u est en dehors de l'intervalle : c'est le cas de communications quasi-synchrones ;
c) f(u) est une distribution de Gauss de la variable u.

## Revendications

1. Procédé de transmission à étalement de spectre par séquences directes, dans lequel :

A) à l'émission :

- on produit au moins une séquence pseudoaléatoire d'éléments appartenant à l'ensemble des racines Mième de l'unité ayant un débit plus important que celui des données à transmettre,
- on affecte à au moins un utilisateur du procédé l'une desdites au moins une séquence,
- on multiplie les données à transmettre à un utilisateur déterminé par la séquence correspondante à cet utilisateur,
- on module une porteuse radioélectrique par tous les signaux obtenus après multiplication des diverses données à transmettre par les séquences correspondantes,
- on émet le signal formé par la porteuse ainsi modulée,

B) à la réception, chez chaque utilisateur :

- on reçoit le signal transmis,
- on soumet le signal reçu à un filtrage adapté à la séquence pseudoaléatoire affectée à cet utilisateur, le signal reçu comportant des pics de grande amplitude appelés pics principaux et des pics de moindre amplitude appelés pics secondaires,
- on effectue une décision de bit à partir des pics principaux du signal filtré,
- et l'on restitue l'information transmise,

ce procédé étant caractérisé par le fait que :

- on produit un lot de N séquences aléatoires d'éléments appartenant à l'ensemble des racines Mième de l'unité, N étant un entier au moins égal à 1, ces séquences ayant toute une certaine longueur L,
- on optimise ces séquences à l'égard de l'une au moins des fonctions d'autocorrélation et d'intercorrélation,
- on affecte l'une de ces séquences ainsi optimisées à chaque utilisateur,
- si les conditions d'utilisation du procédé changent, on produit à nouveau un lot de N séquences optimisées et l'on réaffecte les nouvelles séquences optimisées obtenues aux différents utilisateurs.

2. Procédé selon la revendication 1, dans lequel on minise au moins l'une des quantités suivantes :

a)

$$\underset{u}{\text{Max}} \left| \sum_{i=0}^{L-1-u} X_i Y_{i+u}^* + \text{cas} \sum_{i=L-u}^{L-1} X_i Y_{i+u}^* \right|,$$

u étant un entier non congru à 0 modulo L et pour tous les doublets de séquences (X, Y) du lot, X et Y étant deux séquences différentes,

b)

$$\underset{u \neq 0}{\text{Max}} \left| \sum_{i=0}^{L-1-u} X_i X_{i+u}^* + cas \sum_{i=L-u}^{L-1} X_i X_{i+u}^* \right|,$$

u étant un entier non congru à 0 modulo L, pour toutes les séquences X du lot, le facteur "cas" étant égal aux différentes valeurs possibles des éléments appartenant à l'ensemble des racines M$^{ième}$ de l'unité.

3. Procédé selon la revendication 1, dans lequel on minimise au moins l'une des quantités suivantes :

a)

$$\underset{u}{\text{Max}} \left| f(u) \left[ \sum_{i=0}^{L-1-u} X_i Y_{i+u}^* + cas \sum_{i=L-u}^{L-1} X_i Y_{i+u}^* \right] \right|,$$

u étant un entier non congru à 0 modulo L et pour tous les doublets de séquences (X, Y) du lot, X et Y étant deux séquences différentes,

b)

$$\underset{u}{\text{Max}} \left| f(u) \left[ \sum_{i=0}^{L-1-u} X_i X_{i+u}^* + cas \sum_{i=L-u}^{L-1} X_i X_{i+u}^* \right] \right|,$$

u étant un entier non congru à 0 modulo L, pour toutes les séquences X du lot, le facteur "cas" étant égal aux différentes valeurs possibles des éléments appartenant à l'ensemble des racines M$^{ième}$ de l'unité,

où f(u) est une fonction de pondération.

4. Procédé selon la revendication 1, dans lequel on minimise la fonction quadratique suivante :

$$\sum_{u=0}^{L-1} f(u) \left( \sum_{k=0}^{M-1} \left[ \sum_{i=0}^{L-1-u} X_i Y_{i+u}^* + e^{\frac{2jk\pi}{M}} \cdot \sum_{i=L-u}^{L-1} X_i Y_{i+u}^* \right]^2 \right),$$

pour tous les doublets de séquences (X,Y) du lot, X et Y étant deux séquences différentes et pour toute fonction de pondération f(u), où u est un entier.

5. Procédé selon la revendication 4, dans lequel la fonction de pondération f(u) est égale à 1 si u=0 et égale à 0 si u est différent de 0.

6. Procédé selon la revendication 4, dans lequel la fonction de pondération f(u) est égale à 1 si u est compris dans un intervalle [-δ,+δ] où δ est un entier et f(u) est égal à 0, si u n'est pas compris dans ledit intervalle.

7. Procédé selon la revendication 1, dans lequel les éléments sont binaires (M=2), ces éléments étant égaux à +1 ou -1.

8. Procédé selon la revendication 1, dans lequel les éléments des séquences sont égaux à 1, j, -j ou -1 (M=4).

9. Procédé selon la revendication 1, dans lequel le processus d'optimisation combinatoire est un processus de type

**EP 0 845 887 A1**

TABOU.

**10.** Procédé selon la revendication 1, dans lequel le processus d'optimisation combinatoire est un processus de type "recuit simulé".

**11.** Procédé selon la revendication 1, dans lequel le processus d'optimisation combinatoire est un processus de type "recuit microcanonique".

**12.** Procédé selon la revendication 1, dans lequel le processus d'optimisation combinatoire est un processus de type "optimisation canonique".

**13.** Procédé selon la revendication 1, dans lequel le processus d'optimisation combinatoire est du type génétique.

**14.** Procédé selon la revendication 1, dans lequel, dans le cas d'une modulation de phase binaire (M=2), les données à transmettre étant par ailleurs binaires, à la suite de l'étape de multiplication des données à l'émission par la séquence correspondant à un utilisateur déterminé et avant l'étape de modulation de la porteuse radioélectrique, on applique un procédé de codage pour s'affranchir des erreurs liées aux canaux de transmission, et dans lequel, à la réception, après l'étape de filtrage adapté, on applique un procédé de décodage correspondant.

FIG.1

FIG. 2

FIG. 3

FIG. 4

FIG. 5

FIG. 6

FIG. 7

**EP 0 845 887 A1**

Office européen
des brevets

**RAPPORT DE RECHERCHE EUROPEENNE**

Numéro de la demande

EP 97 40 2865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| X | US 5 206 882 A (SCHLOEMER) 27 avril 1993<br>* colonne 1, ligne 55 - ligne 64 *<br>* colonne 4, ligne 48 - ligne 56 *<br>* colonne 5, ligne 1 - ligne 21 *<br>* colonne 6, ligne 28 - ligne 39 *<br>* colonne 7, ligne 15 - colonne 8, ligne 15; figures 6-8 *<br>--- | 1 | H04J13/00 |
| A | WO 94 18774 A (MOTOROLA INC)<br>* page 3, ligne 2 - page 1, ligne 14 *<br>* page 7, ligne 10 - ligne 21 *<br>--- | 1,2,14 | |
| A | EP 0 652 647 A (ALCATEL MOBILE COMM FRANCE)<br>* page 3, ligne 7 - ligne 35 *<br>* page 4, ligne 4 - ligne 16 *<br>* page 4, ligne 34 - ligne 41 *<br>--- | 1,2 | |
| A | KARKKAINEN K H A: "Meaning of maximum and mean-square cross-correlation as a performance measure for CDMA code families and their influence on system capacity"<br>IEICE TRANSACTIONS ON COMMUNICATIONS, AUG. 1993, JAPAN,<br>vol. E76-B, no. 8, ISSN 0916-8516,<br>pages 848-854, XP000396887<br>* page 848, colonne de droite, dernier alinéa - page 849, colonne de gauche, alinéa 1 *<br>* page 849, colonne de droite, alinéa 3 *<br>---<br>-/-- | 1,2 | **DOMAINES TECHNIQUES RECHERCHES (Int.Cl.6)**<br>H04J<br>H04B<br>H04L |

Le présent rapport a été établi pour toutes les revendications

| Lieu de la recherche | Date d'achèvement de la recherche | Examinateur |
|---|---|---|
| LA HAYE | 9 mars 1998 | Pieper, T |

EPO FORM 1503 03.82 (P04C02)

**Office européen des brevets**

**RAPPORT DE RECHERCHE EUROPEENNE**

Numéro de la demande

EP 97 40 2865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| A | SAL'NIKOV YU K: "Correlation properties of a partitioning of a complete code for phase-shift keyed signals into contiguous classes" RADIOTEKHNIKA, MAY 1984, USSR, vol. 39, no. 5, ISSN 0033-8486, pages 81-83, XP002038262 * page 118, alinéa 1 - alinéa 2 * * page 120, alinéa 3 - alinéa 4 * | 1,2 | |
| A | SCHOTTEN H -D: "OPTIMIERUNG DES INTERFERENZPARAMETERS FUR DIRECT-SEQUENCE CODEMULTIPLEX-SYSTEME" CODIERUNG FUR QUELLE, KANAL UND UBERTRAGUNG, VORTRAGE DER ITG-FACHTAGUNG, MUNCHEN, OCT. 26 -28, 1994, no. NR. 130, 26 octobre 1994, INFORMATIONSTECHNISCHE GESELLSCHAFT IM VDE (ITG), pages 137-144, XP000503787 * page 137, alinéa 3 - page 140, alinéa 3 * * page 142, alinéa 4.5.1 * | 1 | |
| A | HUI TONG ET AL: "SOME NEW RESULTS ON CORRELATION PROPERTIES OF SEQUENCES USED IN CDMA SYSTEMS" PROCEEDINGS OF THE REGION TEN CONFERENCE (TENCON), BEIJING, OCT. 19 - 21, 1993, vol. 3 OF 5, 19 octobre 1993, YUAN BAOZONG (ED ), page 81/82 XP000521367 * page 81, colonne de droite, alinéa II * * page 82, colonne de droite, alinéa IV * | 1,3 | |

DOMAINES TECHNIQUES RECHERCHES (Int.Cl.6)

-/--

Le présent rapport a été établi pour toutes les revendications

| Lieu de la recherche | Date d'achèvement de la recherche | Examinateur |
|---|---|---|
| LA HAYE | 9 mars 1998 | Pieper, T |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

Office européen des brevets

# RAPPORT DE RECHERCHE EUROPEENNE

Numéro de la demande

EP 97 40 2865

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.6) |
|---|---|---|---|
| D,A | PIRLOT M: "General local search methods" JOINT CONFERENCE OF EURO AND THE UK OPERATIONAL RESEARCH SOCIETY, EURO XIII/OR 36. ASPECTS OF OPERATIONAL RESEARCH: TUTORIAL AND RESEARCH REVIEW PAPERS, GLASGOW, UK, JULY 1994, vol. 92, no. 3, ISSN 0377-2217, EUROPEAN JOURNAL OF OPERATIONAL RESEARCH, 9 AUG. 1996, ELSEVIER, NETHERLANDS, pages 493-511, XP002038263 * le document en entier * | 1,4-8 | |

DOMAINES TECHNIQUES RECHERCHES (Int.Cl.6)

Le présent rapport a été établi pour toutes les revendications

| Lieu de la recherche | Date d'achèvement de la recherche | Examinateur |
|---|---|---|
| LA HAYE | 9 mars 1998 | Pieper, T |

EPO FORM 1503 03.82 (P04C02)